# EUROPEAN PATENT SPECIFICATION

(11) **EP 4 455 738 B1**
(45) Date of publication and mention of the grant of the patent: **16.09.2026**
(21) Application number: 24161461.9
(22) Date of filing: 05.03.2024
(51) Int. Cl.: G01T 1/20, G01T 1/29

(54) **PARTICLE DETECTOR**
TEILCHENDETEKTOR
DÉTECTEUR DE PARTICULES

(30) Priority: 25.04.2023 EP 23169901
(43) Date of publication of application: 30.10.2024
(73) Proprietor: Marvel Fusion GmbH, 80339 Munich (DE)
(72) Inventor: Fischer, Peter, 80339 München (DE)
(74) Representative: HKW Intellectual Property PartG mbB

(56) References cited:
- EP-A1- 2 919 037
- WO-A1-2015/189601
- WO-A1-2022/185032
- US-A1- 2012 294 421
- US-A1- 2014 263 991

## Description

### TECHNICAL FIELD

The present disclosure relates to a detector stack for measuring spatial and/or spectral properties of particles impinging thereon. It also relates to a method for measuring spatial and/or spectral properties of particles impinging on the detector stack.

### TECHNICAL BACKGROUND

In the art there are known detectors for spectrally and spatially characterizing particle beams. An example thereof are RCF, Radiochromic film, detectors, which are used to detect protons. Therein the films are placed one after each other and are capable of recording the spatial distribution as a function of proton energy.

In the art there are also known scintillation-based detectors. The publication "A 2D scintillator-based proton detector for high repetition rate experiments, Huault et Al, Beam Line and Instrumentation: Fourth Workshop, Monday - Tuesday 11 - 12 May 2020 - Garching" describes a scintillation-based detector able to measure both the proton energy and its transversal spatial distribution along the particle propagation axis and capable of being setting at HRR. The detector consists of a series of scintillators placed similarly as an RCF stack but positioned with a relative angle one respect to the others in order to leave a free field of view for an imaging system looking at the back side of each layer and the imaging system can be arranged depending on the spatial constraint of the experiment.

WO 2022/185032 A1 relates to a dosimeter for characterising a spatial distribution of a radiation dose in a sensing region, the dosimeter comprising; a plurality of scintillation fibres extending substantially parallel to a first direction in the sensing region and arranged in a two-dimensional array in a plane perpendicular to the first direction, wherein the radiation absorption properties of the plurality of scintillation fibres are configured to approximate the radiation absorption properties of human body tissue; and a photodetector comprising a plurality of photodetector regions coupled to respective ones of the plurality of scintillation fibres so as to generate signals for respective ones of the photodetector regions in response to radiation interaction events in corresponding ones of the scintillation fibres; further comprising a controller arranged to receive the signals from the photodetector regions and to determine a spatial distribution of a radiation dose in the sensing region based on the extent to which the signals from the plurality of photodetector regions indicate there have been radiation interaction events in different ones of the plurality of scintillation fibres.

WO 2015/189601 A1 relates to a 2D position-sensitive detector assembly comprising at least three substantially planar detector portions arranged in overlapping relationship as viewed normal to a plane of the detector portions, each detector portion comprising an array of substantially parallel, linear detector elements, the detector elements of respective detector portions being mutually non-parallel, the detector elements each being configured to generate one or more electrical signals in response to interaction of a particle of radiation therewith.

US 2014/263991 A1 discloses a radiation dosimetry apparatus and associated methods for measuring a radiation dose. The radiation dosimetry apparatus includes multiple scintillating elements for detecting amounts of radiation dose at multiple points within a detection region. Each of the scintillating elements generates light in response to radiation interacting within their volume. A light guide combines the light generated by all of the scintillating elements as well as radiation-induced contaminated optical energy and transmits the combined light to a spectral analysis setup.

EP 2 919 037 A1 discloses a method for optimizing photon management in scintillation crystals, including: depositing a material, having a refractive index "n" approximately equal to the refractive index of a scintillation crystal, on one surface of the scintillation crystal; structuring the material via a structuring means; and creating sub-diffractive size structures in the material such as to enable the refractive index to be adapted between the scintillation crystal and the material on said surface and/or create structures at the diffraction limit in said material in the form of a single-order blazed distribution grating by directly redirecting the photons reflected on the side surfaces of the crystal toward the surface of the crystal, such as to enable the time distribution to be reduced.

US 2012/294421 A1 discloses an X-ray imaging apparatus acquiring a differential phase contrast image of a test object without using a light-shielding mask for X-ray. The apparatus includes an X-ray source, a splitting element configured to spatially divide an X-ray emitted from an X-ray source and a scintillator configured to emit light when a divided X-ray beam divided at the splitting element is incident on the scintillator. The apparatus also includes a light-transmission limiting unit configured to limit transmitting amount of the light emitted from the scintillator and a plurality of light detectors each configured to detect the amount of light that has transmitted through the light-transmission limiting unit. The light-transmission limiting unit is configured such that a light intensity detected at each of the light detectors changes in response to a change in an incident position of the X-ray beam.

### SUMMARY

However, RCF detectors are difficult to use since after each measurement the RCF needs to be physically extracted from the detector, manually analyzed, and replaced after every use.

Moreover, also known scintillation-based detectors present a number of disadvantages. For instance, they have a physical extension whose miniaturization is limited by the need to image scintillator via the imaging system. They also have a limited energy resolution, and are subject to propagation effects as well as scattering effects.

There is hence a need in the art to provide a reusable detector with an improved energy and/or spatial resolution. There is also a need to provide a detector capable of resolving spatial energy distribution of different particles in a single shot.

The present disclosure has been conceived in view of the above shortcomings. It is hence an objective of the disclosure to at least partially mitigate the shortcomings of the known art. The present invention is defined by the enclosed claims.

According to the claimed invention, there is provided a detector stack comprising a first detector and a second detector arranged along a first direction. Each of the first detector and second detector comprise generation means and collection means. The generation means are configured to generate photons or charged particles when interacting with incident particles, the photons or charged particles being indicative of energies of the respective incident particles. The collection means are configured to collect the generated photons or charged particles and output an output signal representing information of a one-dimensional travelling direction of the incident particles. The collection means of the first detector and the collection means of the second detector are configured to respectively output output signals representing different one-dimensional travel directions of the incident particles.

According to the claimed invention, the first detector comprises a filter configured to filter the generated photons or charged particles along a filtering direction that is oriented perpendicular to an axis along which the filter extends in thickness, wherein the filter is further configured such that one or more transmission and/or reflection properties of the filter vary along the filtering direction, and wherein the filter is arranged between the generation means and the collection means in the first direction
Since the detector stack performs the detections by means of photons or charged particles generation and since each detector acquires information based on different travelling directions of the particles, it is possible to improve the usability of the detector stack while also ensuring high spatial resolution and real-time read of the particles.

Thanks to the additional filter it is possible to gather additional information regarding the origin of the scintillation source, thus increasing the spatial resolution of the detector.

According to an embodiment, at least one of the first detector and second detector further comprises absorber means. Either the absorber means, the generation means and the collection means are arranged in this order in the first direction. Alternatively, the generation means and the collection means are the same means which is embedded in the absorber means.

Thanks to the absorber layer it is possible to improve the spectral resolution of the incoming particles.

According to an embodiment, the collection means of the first detector includes an array of waveguides.

The use of wave guides as collection layer simplifies the architecture of the detector and hence increases its usability.

According to an embodiment, the waveguides of the array are disposed substantially in parallel to define a collection direction, preferably wherein the waveguides of the array are disposed along the second direction.

According to an embodiment, the collection means (5) of the second detector (U2) includes an array of waveguides disposed substantially in parallel to define a collection direction, wherein the collection direction of the first detector and the collection direction of the second detector are tilted one with respect to another of a first tilting angle.

According to an embodiment, the first tilting angle is substantially a right angle.

According to an embodiment, the filtering direction of the filter of the first detector (U1) is rotated of a second tilting angle with respect to the collection direction of the first detector (U1).

According to an embodiment, the second tilting angle is substantially a right angle.

According to an embodiment, the detector stack further comprises a measurement device configured to measure the output signals, wherein the measurement device is configured to perform time of flight, measurements.

According to an embodiment, immediate neighboring detectors in the first direction are configured to respectively output output signals representing different one-dimensional travel directions of the incident particles.

According to an embodiment, the collection means of the first detector and the collection means of the second detector are configured to respectively output output signals representing different one-dimensional travel directions of the incident particles in a plane defined by a second direction and a third direction, the first direction, the second direction and the third direction being different directions.

According to an embodiment, the generation means is a generation layer and the collection means is a collection layer, wherein the generation layer and the collection layer are layers extending along the second direction and the third direction.

According to another aspect of the claimed invention, there is provided a method for detecting energy and spatial distribution of particles by using a detector stack comprising a first detector and a second detector, arranged along a first direction, each of the first detector and second detector comprising generation means and collection means, the collection means of the first detector and the collection means of the second detector being configured to respectively output output signals representing different one-dimensional travel directions of the incident particles, the method comprising the steps of:
- providing the detector stack,
- generating photons or charged particles by letting incident particles interacting with the generation means of the first detector, the photons or charged particles being indicative of energies of the respective incident particles,
- collecting the photons or charged particles generated by the generation means of the first detector via the collection means of the first detector,
- outputting an output signal representing information of a one-dimensional travelling direction of the incident particles,
- generating photons or charged particles by letting incident particles interacting with the generation means of the second detector, the photons or charged particles being indicative of energies of the respective incident particles,
- collecting the photons or charged particles generated by the generation means of the second detector via the collection means of the second detector,
- outputting an output signal representing information of a one-dimensional travelling direction of the incident particles.

### BRIEF DESCRIPTION OF THE DRAWINGS

FIG. 1 shows a detector according to the known art.
FIG. 2A shows a detector unit of a detector stack according to an embodiment of the present disclosure.
FIG. 2B shows another detector unit of a detector stack according to an embodiment of the present disclosure.
FIG. 3 shows a detail of a detector unit of a detector stack according to an embodiment of the present disclosure.
FIG. 4 shows yet another detector unit of a detector stack according to an embodiment of the present disclosure.
FIG. 5 shows a detector stack according to an embodiment of the present disclosure.
FIG. 6 shows a detector stack according to a variation of the embodiment of the present disclosure.
FIG. 7 shows a detector stack according to yet another variation of the embodiment of the present disclosure.
FIG. 8 shows a block diagram of a method for detecting energy and spatial distribution of particles impinging on the detector stack according to another embodiment of the present disclosure.

### DETAILED DESCRIPTION OF THE PREFERRED EMBODIMENTS

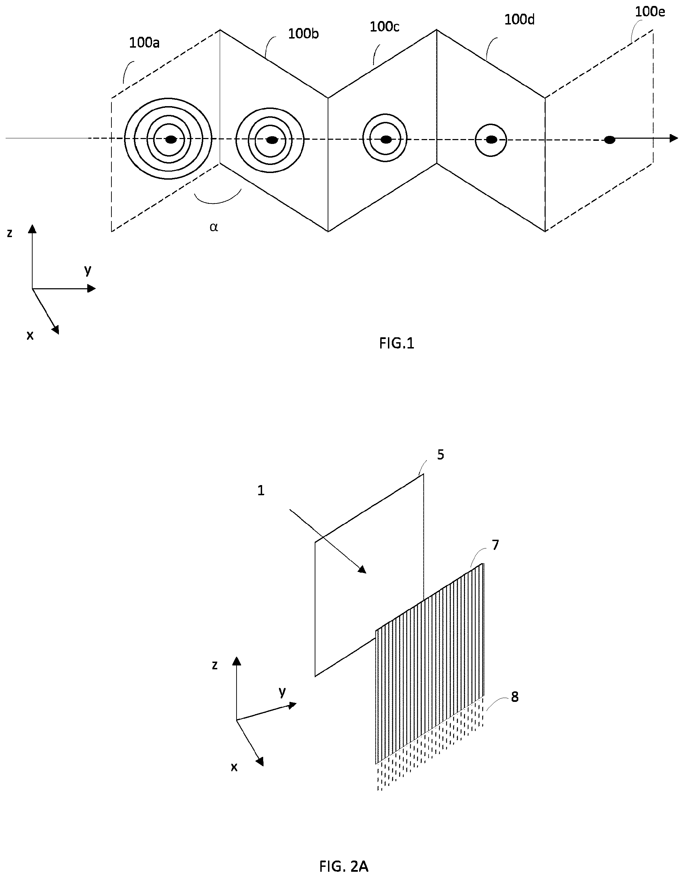

FIG. 1 shows a RCF, Radiochromic film, detector according to the known art. An RCF detector is made up of a plurality of RC films, 100a to 100e and each film is capable of detecting charged particles, as for instance, protons. In particular, the particles impinge on a first film 100a of the plurality of films, cross it, and impinge on a next film of the stack 100b. A plurality of films or layers may also be referred to as stack. Depending on the energy of the particles and on the properties of the detector, one, more, or all the filters may be impinged on. Through the interaction with the particles, the RC film is colored, this is shown as a concentric pattern in the figure. In fact, RF films includes a particular dye which changes its color when exposed to certain kind of radiation. This in turn enables the level of exposure and the properties of the particles to be determined after impinging on the film.

While FIG. 1 shows five films, known RC detectors may have a different number of films. Two consecutive films are separated by a spacing which can be for instance defined in terms of the angle between two subsequent films. For instance, the angle defined on a plane perpendicular to the planes in which the films are included.

### FIRST EMBODIMENT

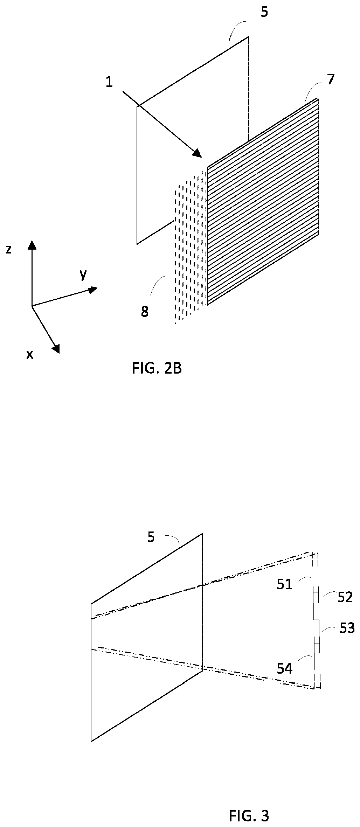

FIG. 2A and 2B show examples of respective detector units which can be employed in the detector stack according to the first embodiment of the present disclosure. The detector stack is configured to detect the energy and the spatial distribution of particles impinging on the detector stack (impinging particles).

FIG. 2A shows a detector, or detector unit, comprising photon generation means 5 and collection means 7 arranged in this order along a first direction (x-axis). The photon generation means are an example of generation means. The photon generation means 5 may be a photon generation layer. The layer may elongate along a second direction (y-axis) and a third direction (z-axis). The photon generation means 5 is an example of generation means 5. The collection means 7 may be a collection layer. The collection layer may elongate along the second direction (y-axis) and the third direction (z-axis) and may hence be parallel to the photon generation layer 5.

The detector is configured to detect the energy of particles and resolve their distribution spatially. The particles may be referred to as incident particles, impinging particles, flux of particles, flux of incident particles, particle beam or incident particle beam. The first direction is oriented to correspond, or partially correspond, to the travelling direction of the particles. The particles may have a plurality of travelling directions i.e., the plurality of travelling directions of each single particle making up the particles. Therefore, the travelling direction of the particle may be the median, i.e., the averaged, travelling direction of the particles. The vectorial direction of the first direction is oriented to have a non-zero component in the travelling direction of the particles. That is, along the first direction there is a positive side and a negative side defined by the travelling direction of the particles. The particles travel from the negative side to the positive side. Preferably, the detector and the particles are mutually arranged so that the first direction corresponds, or substantially corresponds, to the travelling direction of the particles. This leads to a maximization of the detection function of the detector.

The detector may also comprise transport means 8 configured to collect and transport an output signal.

The output signal may correspond for instance, to the photons collected by the collection means 7. The output signal may otherwise be indicative of the collected photons. For instance, the output signal may be indicative of the energy of the collected photons. The output signal may also be indicative of the number of the collected photons. That is, the output signal may be a signal having a functional dependency on the energy and/or number of the collected photons. The output signal may be an electrical signal indicative of the number of photons, generated. Based on the generated photons, the output signal may be obtained by using conventional techniques such as for instance photomultiplication.

The transport means 8 may comprise circuitry for transporting the generated photons and/or for converting the generated photons in electric current.

The photon generation means 5 is configured to generate photons when interacting with incident particles. The photon generation means 5 may for instance be a scintillation layer, or a scintillator. That is, it may be a mean or a layer, configured to generate photons via scintillation. However, the photon generation means 5 is not limited thereto. Physical processes different from scintillation and according to which a particle generates photons when impinging on a material, may also be employed.

The impinging particles may be for instance single species particles such as electrons, protons, or neutrons but they are not limited thereto. For instance, they may also be ions, atoms, or alpha particles. The particles may comprise a mixture of different single-species particles. For instance, the particles may comprise a mixture of protons, neutrons, electrons, ions, atoms and/or alpha particles.

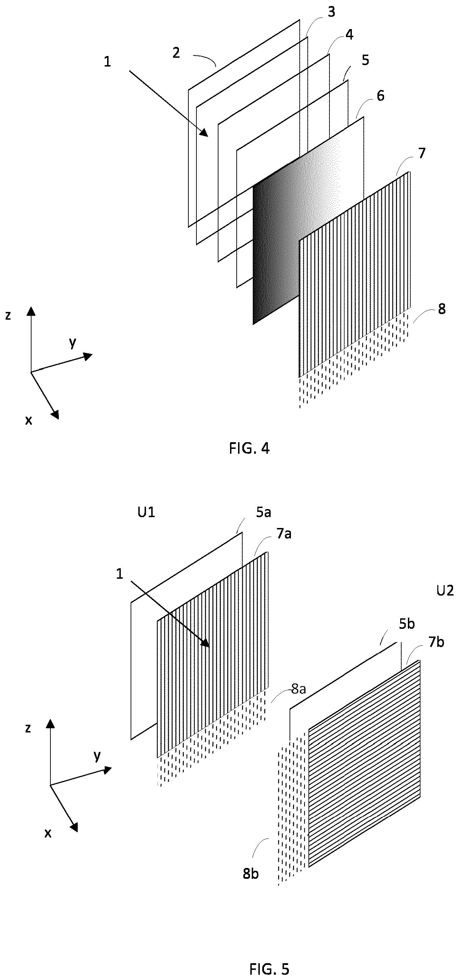

The photons generated by the photon generation means 5 are indicative of energies of the respective incident particles. In fact, a particle, to impinge on, or pass through, the photon generation means 5, and/or to generate photons must have a minimum energy. This minimum energy depends on the detector unit physical properties and geometry as well as on the detector stack's geometry. That is, the minimum energy is known in advance. For instance, and with reference to FIG. 4, FIG. 6 and FIG. 7, it also depends on the presence and on the properties of the absorption layer(s) 2 to 4. That is, the fact that a particle generates photons per se, means that the particle has a minimum energy. Different detectors in a detector stack such as that of FIG. 5, FIG. 6 and FIG. 7 have different minimum energies. Therefore, it becomes possible to measure the energies of the particle by establishing which minimum energy a given particle has.

The collection means 7 is configured to collect the generated photons and output an output signal representing information of a one-dimensional travelling direction of the incident particles. For instance, the collection means 7, may be configured to output an output signal representing only information of a one-dimensional travelling direction of the incident particles in the plane defined by the second and third direction. In other words, the signal output by the collection means, does not permit to derive information of a second, independent, travelling direction of the incident particles in the plane defined by the second and third direction.

The collection means 7, may be divided in a plurality of stripes (depicted in the figures as longitudinal areas). Each stripe is configured to gather photons generated in a corresponding area of the generation means 5.

As exemplarily depicted in FIG. 2A, the collection means 7 is divided in vertical stripes extending along the z-axis. The output signal output by the collection means 7 provides information on the photon collected along the whole z-axis of the detector. Thus, it provides information relative to the y-coordinate of a given incident particle. That is, the collection means integrates along the z-axis, or in other words, sums the signal (i.e., the photons) gathered along a single stripe.

More in general, each of the stripes is defined along the second direction (y-axis in the figure) and along the third direction (z-axis in the figure). The stripes are elongated along the third direction and are configured to collect respective photons in the third direction. The stripes are therefore configured to provide information relative to the travelling direction of the particles along the second direction.

Preferably, the photon generation means 5 and the collection means 7 are close enough so that it can be assumed that photon generated in a portion of the photon generation means are also collected by a corresponding portion of the collection means. The shorter the distance between the collection means 7 and the photon generation means 5 the better this approximation hold.

The first direction, the second direction, and the third direction are each defined by vectorial components. The first direction, the second direction and the third direction are different directions. That is, at least one of the vectorial components defining the first direction is different from at least one of the vectorial components defining the second direction. At least one of the vectorial components defining the first direction is different from at least one of the vectorial components defining the third direction. Moreover, at least one vectorial components defining the second direction is different from at least one vectorial components defining the third direction.

Preferably, the first direction, the second direction, and the third direction are perpendicular to each other. For instance, the first direction, the second direction and the third direction are represented respectively by the cartesian vectors: (1,0,0), (0,1,0), and (0,0,1).

A configuration in which all the stripes of the collection means 7 are arranged in parallel is preferrable since it makes it easier to perform data analysis of the output signal. However, different geometrical arrangements may be employed. In this case, the specific geometries of the strips are to be taken into account when analyzing the output signal.

For instance, the stripes may be oblique in the plane defined by the second direction and the third direction (i.e., the y-z plane). Moreover, as a further example, the collection means 7 may be divided in different sectors. The stripes may be differently oriented in different sectors of the collection means 7.

The direction of the stripes defines the collection direction of the collection means 7. The collection direction is therefore the direction along which the photons are collected, and the direction along which the signal is integrated along the stripe. The collection direction is different from the first direction and it is included in the plane defined by the second direction and the third direction (y-z plane). For instance, the collection direction may correspond, or substantially correspond, to the second direction. According to another example, it may correspond, or substantially correspond to the third direction.

The collection means 7 may be, or may comprise, for instance an array of waveguides. In this case a given single waveguide of the array of waveguides, may correspond to a given stripe of the collection means 7. A wave guide may be a cylindrically symmetric structure. For instance, it may be of a substantially parallelepiped form, e.g., it may have a substantial parallelepiped shape. This enables to maximize their collection surface and hence their collection function, while also optimizing space usage. The waveguides need in principle not to be all equal, to be all parallel one to another, and/or to be all of a linear or parallelepiped form. That is, they do not need to have identical, similar, or substantially similar geometrical properties. Example of geometrical properties may be for instance, the length of the waveguide, the cross-section of the waveguide, the form or shape of the waveguide etc.. However, in the preferred configuration the waveguides may all be substantially identical or at least similar. That is, they may be characterized by substantially the same geometrical properties. Moreover, the waveguides may be preferably linearly disposed in the array and be all parallel one to another or substantially parallel one to another.

According to this example the collection direction of the collection means 7 is defined by the symmetry axis of a waveguides. Since the waveguides have a cylindrical symmetry, the collection direction corresponds to the axial direction of the waveguides.

The photon generation means 5 and the collection means 7 may be the same means, i.e., a generation and collection means. The photon generation means 5 and the collection means 7 may be different means.

The photon generation means 5 may also be made of stripes. These stripes may each have homogeneous properties, in particular, along the z-axis. For instance, they may be made of a same scintillation material. However, the stripes are not limited thereto. For instance, and with reference to FIG. 3, a given stripe may be a scintillator material having different portions, 51 to 54. Each of the different portions 51 to 54 may have different photon generation properties or different scintillation properties. For instance, different portions may be made of different scintillation materials. These different portions may then generate photons of different wavelengths.

In the art, there are known a number of suitable different scintillation materials. Certain types of plastics, as for instance, PEN and PET, may be particularly well suited.

A same waveguide of a given collection layer 7 collects therefore different photons along the z-axis. Photons having different energies may be separated after collection by the detection means. For instance, the detection means may filter the collected photons based on their wavelength. Suitable photon filtering techniques are well known in the art. For instance, it is well-known that prisms are capable of spatially separating photons based on the wavelengths.

For the sake of illustration FIG. 3 shows a stripe of the photon generation means 5 having four portions. However, the stripes may have a higher or lower number of portions. Moreover, a first stripe may have a first number of portions and a second stripe of the same generation means 5 may have a second number of portions. That is, the stripes of the photon generation means 5 may each have a different number of portions. However, preferably each of the stripes of the photon generation means 5 has M portions. M is a positive integer larger than 1. That is, preferably, all the stripes of a same photon generation means 5 have M portions.

By dividing the stripes in different portions, it is possible to spatially resolve the incoming particles even by using a single collection means 7. In other words, according to this example, a single detector is capable of collecting information of two one-dimensional travelling directions of the incident particles in the plane defined by the second and third direction.

It is to be noted that according to a different example. neighboring stripes may have a different number of portions. For instance, stripe (i) may have M portions and the immediate neighboring stripe (i+1), may have J portions. M and J are both integers larger than 1. According to an example, M may be equal to two times J.

FIG. 4 shows a detector, or detection unit, according to another aspect of the disclosure. This detector includes all the elements of the detector described in connection with FIG. 2A. It also includes additional elements. In particular, the detector comprises absorber means 2 to 4. For instance, the detector comprises one or more absorber layers 2 to 4. Each absorber layer 2 to 4 is configured to block particles whose energy is below a given threshold. These elements are optional in the configuration described in connection with FIG. 2A.

The one or more absorber means 2 to 4 makes it possible to filter out, for instance, to block, undesired background noise and/or calibrate the range of energies which the detector is configured to detect. The absorption properties, for instance, the thickness or the material, of the absorber means may be chosen depending on the specific applications of the detector.

FIG. 4 shows three absorber layers. However, the present disclosure is not limited thereto and a higher or a lower number of absorber layers may be present. The given threshold defined by the one or more absorber layers 2 to 4, may be predetermined, that is, it may be a physical property of the detector unit.

The one or more absorber layers 2 to 4, may consist of a homogeneous material with no preferential orientation. For instance, it may be an absorber plate. For instance, it may be made of aluminum. However, different materials may also be used.

According to an embodiment, the absorber layer(s) 2 to 4, the photon generation means 5 and the collection means 7 may be arranged in this order along the first direction (i.e., along the x-axis in the figure). Therefore, the one or more absorber layers 2 to 4 are first crossed by the particles. Then the generation means 5 is crossed by the particles. Finally, the collection means 7 are crossed by the particles (assuming the particles have sufficient energy).

Alternatively, the photon generation means 5 and the collection means 7 may be built in the same means. This means is referred to as generation and collection means. The generation and collection means may also be embedded in the absorber means 2. In this case the absorber means 2 to 4 may be cladded on the generation and collection means. Optionally, the detector may comprise a filter 6. The filter 6 may be a plate or a layer. That is, the filter 6 may be elongated along a plane, the y-z plane, and may have a substantially smaller spatial extension along the direction perpendicular to the plane, i.e., the x-axis. The x-axis may be associated with a thickness direction of the filter, i.e., a direction along which the filter may extend in depth and may thus extend in volume. The filter is configured to filter, or transmit, only certain spectral components and/or certain wavelengths of the generated photons. In other words, the filter is configured to block a portion of the photons and/or (charged) particles generated by the photon generation means 5. The filter may be placed between the photon generation means and the collection means. One or more filtering properties/parameters of the filter 6 may vary over an elongation direction of the filter. The axis along which the filter properties vary in the y-z plane may be referred to as filtering direction. The axis along which the filter properties vary may thus be oriented perpendicular to a thickness direction of the filter. In some cases, the filtering direction may be oriented perpendicular to the direction of incident particles. However, in some cases, the filtering direction may also be oriented parallel to the thickness direction of the filter.

A variation of the one or more filtering properties may be understood as a change of at least one filtering parameter of the filter along the filtering direction. A change may be a decrease or increase of one or more filtering properties. The filter may be configured such that one or more transmission and/or reflection properties of the filter vary along the filtering direction.

The one or more filtering properties that may vary over the elongated direction of the filter may, e.g., be an absorption coefficient of the filter (e.g., a neutral density), a wavelength selective transmission (i.e., a transmission coefficient of the filter for impinging particles may vary according to a wavelength of the particles such that, e.g., the transmission coefficient of the filter may be higher for blue-shifted wavelengths as compared to red-shifted wavelengths on a first end of the filter whereas the transmission coefficient of the filter may be smaller for blue-shifted wavelengths as compared to red-shifted wavelengths on a second end of the filter that is arranged opposed to the first end along the filtering direction), a reflectivity of the filter, a birefringence, etc.

The one or more filtering properties may vary linearly (e.g., representing a gradient filter) along the filtering direction (i.e. the one or more filtering properties may vary by a constant relative and/or absolute amount over a constant spatial interval along the filtering axis). Alternatively, it may also be possible that the filtering properties are configured to vary in quadrature or cubically along the filtering axis.

In other cases, the filtering properties may also vary radially (outwards or inwards) from a center of a planar surface of the filter (perpendicular to a thickness direction of the filter). In such a case, the filtering direction may be oriented radially outwards from the center of the planar surface of the filter or vice versa. It will be appreciated that the variations of the one or more filtering properties may not be limited thereto and that other variations of the filtering properties may also be possible.

The filtering direction of the filter 6 is preferably different from the collection direction of the collection means 7. That is, the collection direction and the filtering direction are each characterized by respective vectorial components in the y-z plane and at least one vectorial component of the filtering direction is different from one of the vectorial components of the collection direction. Therefore, the filtering direction of the filter is rotated of a tilting angle with respect to the collection direction. This tilting angle is referred to as second tilting angle and is defined in the plane defined by the second and third directions (y-z plane). The tilting angle may be any angle different from zero and from N*360 degrees, wherein N is an integer number, negative or positive.

The presence of the filter 6 leads to an asymmetric collection of the generated photons, by the collection means 7, along the filtering direction. By knowing the filtering properties of the filter 6, it is possible to derive additional spatial information about the travelling direction of the particle in the y-z plane. Hence it is possible to improve the spatial resolution of the detector. This improvement is maximized if the filtering direction of the filter 6 is perpendicular to the collection direction of the collection means 7.

FIG. 2B shows a detector according to another example. The configuration of FIG. 2B is similar to that of FIG. 2A. For the sake of conciseness, the description of components which are the same as, or similar to, those of FIG. 2A, is not repeated. Reference is made instead to the description already provided in connection with FIG. 2A. In the following emphasis shall be placed on describing the differences.

The collection means 7, may be divided in a plurality of stripes (depicted in the figures as areas elongated along the second direction). Each stripe is configured to gather photons generated in a corresponding area of the generation means 5.

According to the detector of FIG. 2B, the collection means 7 is divided in horizontal stripes extending along the y-axis (the second direction). The output signal output by the collection means 7 provides information on the photons collected along the whole y-axis of the detector. Thus, it provides information relative to the z-coordinate of a given incident particle generating the photon(s). That is, the collection means integrates along the y-axis, or in other words, sums the signal (i.e., the photons) gathered along a single stripe.

More in general, each of the stripes is defined along the second direction (y-axis in the figure) and along the third direction (z-axis in the figure). The stripes are elongated along the second direction and are configured to collect respective photons in the second direction. The stripes are therefore configured to provide information relative to the travelling direction along the third direction of the particles.

The collection direction of the collection means 7 of the detector is rotated along the z-y plane in comparison to the collection means 7 of the detector of FIG. 2A.

That is, the collection direction of the collection means 7 of FIG. 2B is rotated of a tilting angle with respect to the collection direction of the collection means 7 of FIG. 2A. This tilting angle is referred to as first tilting angle and is defined in the plane of the second direction and third direction (y-z plane). The tilting angle may be any angle different from zero and from N*360 degrees, wherein N is an integer number, negative or positive.

The optional filter 6, if present, is rotated so that the filtering axis is different from, preferably perpendicular to, the collection direction of the collection means 7.

FIG. 5 shows a first embodiment of the present disclosure. According to the first embodiment there is provided a detector stack comprising two detectors U1 and U2 arranged along the first direction.

The detectors according to this embodiment can be any of the detectors described in the present disclosure.

The collection direction of the collection means 7a of the first detector U1, is rotated of the first tilting angle with respect to the collection direction of the collection means 7b of the detector U2.

Therefore, according to the first embodiment the collection means 7a and 7b of immediate neighboring detectors in the first direction are configured to respectively output output signals representing different one-dimensional travel directions of the particles. Immediate neighboring detectors means that there are no intervening detectors between the two detectors. That is, a volume may be defined in between two sequentially arranged detectors (e.g., between a first detector and a second detector) that is defined by a planar extension of the detector (e.g., in a y-z-plane) and a separation of the two sequentially arranged detectors (e.g., along a x-direction). The volume between two (immediately) sequentially arranged detectors may be free of (intermediate) structural elements, in particular detectors. In some cases, the volume between two (immediately) sequentially arranged detectors may be free of any fixtures and/or components.

The two detectors U1 and U2 shown in the figure do not include any absorber means. However, it is to be understood that one or both of the detectors may also include absorber means.

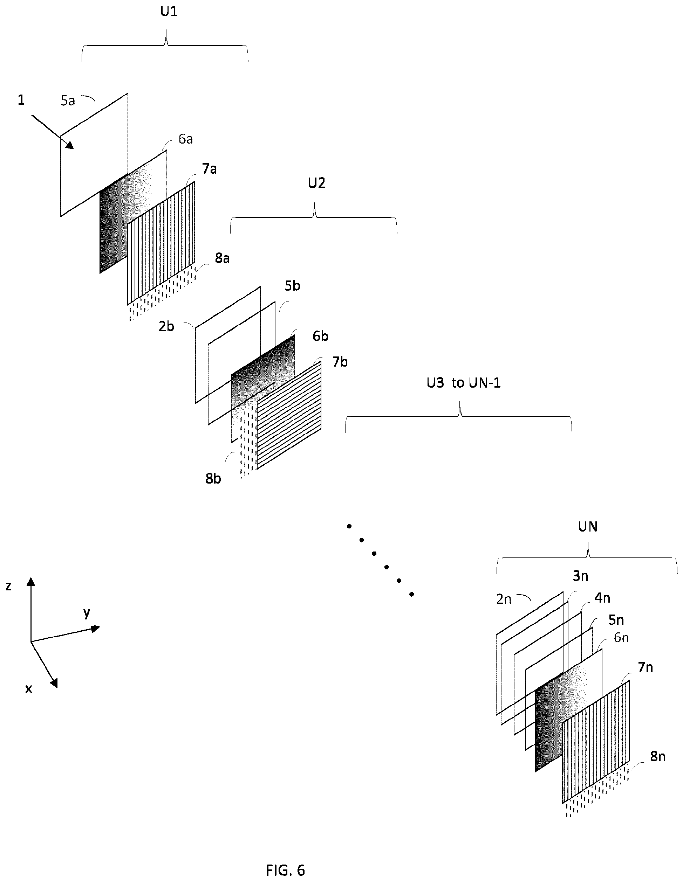

FIG. 6 shows a detector stack according to a variation of the first embodiment of the present disclosure. The detector stack comprises N detectors, or detector units, arranged along the first direction, detectors from U1 to UN. N is an integer number equal to, or larger than, three. The detectors or detector units of this embodiment may correspond to any of the detectors or detector unit described in the present disclosure. According to a preferred embodiment, the filter stack comprises a first plurality of detectors and a second plurality of detectors, wherein the first plurality and the second plurality are interlaced. For instance, the first plurality of detectors may include detectors according to FIG. 2A (i.e., with stripes elongated along the third direction). The second plurality of detectors may comprise detectors according to FIG. 2B (i.e., with stripes elongated along the second direction).

However, the present disclosure is not limited thereto. The first plurality of detectors and the second plurality of detectors may be interlaced and the respective collection layers 7 may generally be configured to respectively output output signals representing different one-dimensional travel directions of the particles. For instance, the collection axis of the collection means of the detectors of the first plurality of detectors and the collection axis of the collection means of the detectors of the second plurality of detectors may have at least one different vector components. That is, the collection axis of the collection means 7 of a given detector needs only to have different vector components in the y-z plane with respect to the collection axis of the collection means 7 of the immediate neighboring detectors. More generally, the detector stack may comprise a number N of detectors. Each of the N detectors may be different from the other N-1 detectors of the detectors stack. For instance, each detector may have different collection directions, filtering directions, first tilting angle and/or second tilting angle. Alternatively, each of the N detector may be different from the other N-1 detector in at least one of these properties.

Each detector of the detector stack comprises photon generation means and collection means.

The collection means of immediate neighboring detectors in the first direction are configured to respectively output output signals representing different one-dimensional travel directions of the particles. Immediate neighboring detectors means that between the two given detectors there are no intervening detectors along the first direction.

The first direction may be a direction along which the particles are travelling. For instance, the particle may have, on average, at least a non-zero component of its travel vector along the first direction.

According to this embodiment a plurality of detectors, or detector units are provided. The different detectors may be configured to measure particles having different energies. This is possible for instance by configuring the detectors so as to have different absorption properties. This can be achieved by appropriately selecting the number, or physical characteristics, of the absorption layers 2 to 4.

For instance, a first detector U1 may have no absorber layer, whereas a second detector U2 may have one absorber layer 2b. A last detector UN may have three absorber layers, 2n to 4n. For the following discussion it is assumed that the absorber layers of all the detectors U1 to UN are all configured to absorb a same amount of energy, namely one energy unit. It is also assumed that no other energy loss occurs in the system. In this case, particles impinging on the generation means 5a would have lost no energy due to the interaction with the detector stack. Particles impinging on the generation means 5b would have lost one energy unit due to the crossing of the absorber layer 2b. Particles impinging on the generation means 5n of the last detector would have lost four energy units due to the interactions with three absorber layers of the last detector and with the absorber layer of the second detector. Moreover, these particles would have lost additional energy due to the interaction with the absorber layers of the other intervening detectors U3 to UN-1.

The above discussion is oversimplified and does not take into account the real energy loss due to the particles interacting with different components of the detectors (waveguides, scintillator etc.). These losses, however can be precisely taken into account as will be readily apparent to those skilled in the art. This could be for instance achieved by experimentally calibrating the detector stack. As it is known in the art, the calibration may also be guided by the theoretical expectation so as to optimize the result and/or expedite the procedure.

As a result, each one of the N detectors is configured to measure respective different energies which can be precisely determined a priory based on the physical properties of the detector stack.

It is therefore possible to determine a spectral profile of the particles.

It is known that different particles have different spectral profiles. Particularly, they have different characteristic features, as for instance, energy peaks, plateaus, etc. Information regarding these characteristic features is readily available. According to the present disclosure, it is possible to use this information to determine the type of particles (i.e., electrons, protons, ect.) making up the particles.

In fact, the number of detectors comprised in the detector stack and the energy each detector of the detector stack is configured to measure can selected based on the expected types of particles making up the impinging particles. For instance, the detector stack can be built to measure energies close to, at, or substantially at, characteristic features of the particles.

In other words, the number of the detectors in the detector stack and the energy each detector of the detector stack is configured to measure is based on the particles to be measured.

It is to be noted that, if the detector is used to measure particles resulting from a given physical reaction, the types of particles expected is usually a readily know information derivable from the theory describing the physical reaction.

Since the output signal (for instance the number of photons) output by each detector of the detector stack is the sum of the signal generated by each particle, information regarding the expected type of particle can be used to deconvolute the output signal and hence determine the actual number of particles per type of particles.

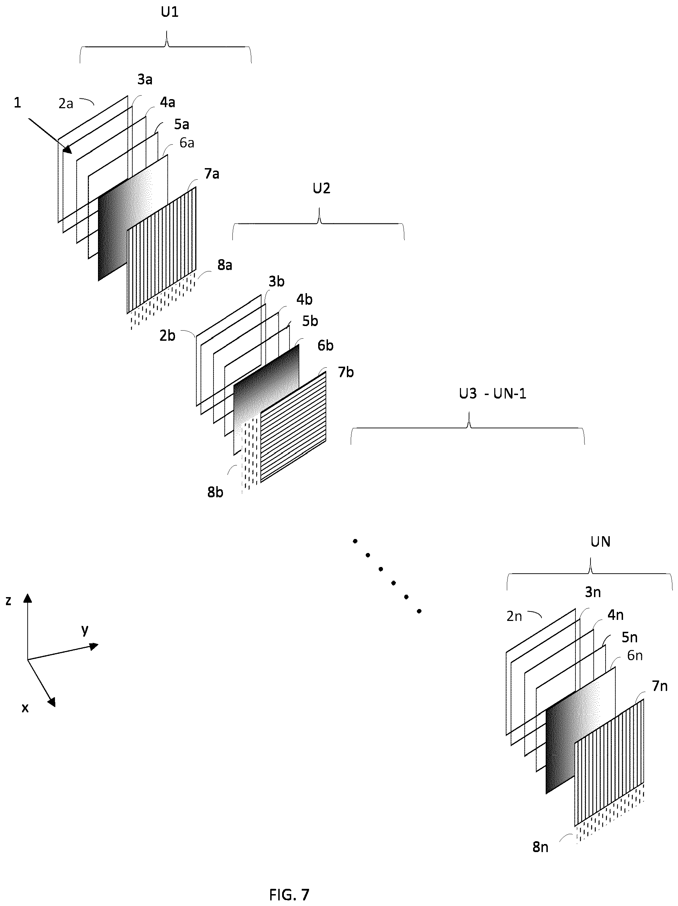

FIG. 7 shows another variation of the embodiment of the present disclosure. In particular, while FIG. 6 shows that the second detector has one absorber layer and the first detector has no absorber layer the present disclosure is not limited thereto. Each detector of the detector stack may have a different number of absorber layers. Alternatively, each detector of the detector stack may have a same number of absorber layers. For instance, FIG. 7 shows a configuration in which each detector of the detector stack has a same number of absorber layers.

### SECOND EMBODIMENT

The second embodiment is described with reference to the first embodiment and by placing special emphasis on the differences. For the sake of brevity, the description of similar or corresponding components is not repeated. It will however be readily understood by those skilled in the art that components or elements of the first embodiments may be employed also in connection with the second embodiment, except when explicitly indicated otherwise.

The generation means 5 according to a detector of the second embodiment may be charged particles generation means 5. For instance, the generation means may be a metallic plate configured to be charged upon being impinged on by particle. For instance, the charged particles generation means may be configured to generate electrons (or holes).

It will be understood that, similarly as for the first embodiment, the detector stack may be experimentally calibrated.

It is to be noted that in the art there are a number of techniques which exploit electron collection for particles detections. For instance, time projections chambers (wherein particles of a single species are measured) and bubble chambers (which are used to measure multiple species particles).

The collection means 7 may be embedded in the generation means 5. That is, the collection means 7 and the generation means may be the same means, i.e., a collection and generation means. For instance, it may be a metallic plate or a layer. The plate may be divided in a plurality of conductive strips. The strips may be both configured to generate electrical charge when impinged on by incident particles and to allow the generated electrical charges to be collected. The conductive stripes may be interlaced with non-conductive stripes to avoid cross talking between neighboring conductive stripes. The collection of the charges may for instance occur at a border of the generation and collection means.

The collection and generation means may be elongated along the second and the third direction. The transport means 8 may be located on a border of the collection and generation means and may be connected to the collection and generation means via collector plates.

### ADDITIONAL EMBODIMENTS

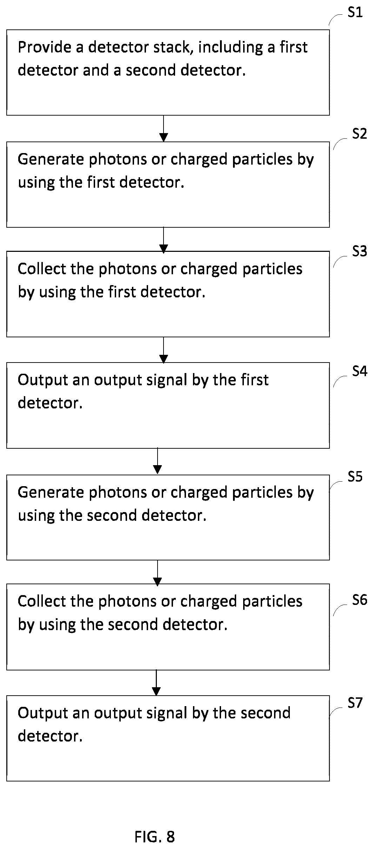

According to another embodiment of the present disclosure, depicted in FIG. 8, there is provided a method for detecting energy (spectral distribution) and spatial distribution of particles impinging on the detector stack. The method comprises the following steps.

A first step S1 of providing the detector stack. A second step S2 of generating photons or charged particles by letting incident particles interacting with the generation means of the first detector, the photons or charged particles being indicative of energies of the respective incident particles. A third step S3 of collecting the photons or charged particles generated by the generation means of the first detector via the collection means of the first detector. A fourth step S4 of outputting, by the first detector, an output signal representing information of a one-dimensional travelling direction of the incident particles. A fifth step S5 of generating photons or charged particles by letting incident particles interacting with the generation means of the second detector, the photons or charged particles being indicative of energies of the respective incident particles. A sixth step S6 of collecting the photons or charged particles generated by the generation means of the second detector via the collection means of the second detector. A seventh step S7 of outputting, by the second detector, an output signal representing information of a one-dimensional travelling direction of the incident particles.

It will be understood that the above steps need not necessarily to be performed in the order presented and a different order of performing the steps may also be possible. Incidentally, while in the above discussion reference has been made to particles in a narrow sense, it shall be understood that according to certain aspects of the present disclosure, the particles may comprise (or solely consists of) gamma radiation or generally of ionizing radiation. Therefore, particles may be understood in a broader sense.

According to some embodiments of the present disclosure the detector stack may be configured to perform time of flight, TOF, measurements. The kinetic energy of a particle also depends on the mass of the particle itself. By detecting the time at which a particle impinges on a given detector of the detector stack and by detecting the kinetic energy of said particle, it is also possible to gather information on the specie of the particle. This information may enable to directly determine the specie of the particle itself. Alternatively, it may enable to make reasonable assumptions on the basis of which to determine the specie of the particle (for instance, it may make it possible to restrict the number of candidate species).

According to some embodiment the scintillation materials of all the generation means may be the same material. For instance, it may be a same organic material. Alternatively, it may be a same inorganic material. The disclosure however, is not limited thereto and the scintillation materials of different generation means may also be different.

Although detailed embodiments have been described, these only serve to provide a better understanding of the disclosure defined by the independent claims and are not to be seen as limiting. Rather the particular embodiments disclosed must be interpreted as representing the concepts that are the basis of this disclosure.

As it will be immediately apparent to the person skilled in the art, the aspects and the features disclosed in conjunction with an embodiment can be freely combined with other embodiments without thereby departing from the teachings of the present disclosure which is defined by the appended claims.

## Claims

1. A detector stack comprising a first detector and a second detector (U1, U2) arranged along a first direction,
each of the first detector and second detector (U1, U2) comprising:
generation means (5a, 5b) configured to generate photons or charged particles when interacting with incident particles, the photons or charged particles being indicative of energies of the respective incident particles,
collection means (7a, 7b) configured to collect the generated photons or charged particles and output an output signal representing information of a one-dimensional travelling direction of the incident particles,
wherein the collection means of the first detector (7a) and the collection means of the second detector (7b) are configured to respectively output output signals representing different one-dimensional travel directions of the incident particles,
the detector stack being **characterized in that** the first detector (7a) comprises a filter (6) configured to filter the generated photons or charged particles along a filtering direction that is oriented perpendicular to an axis along which the filter (6) extends in thickness, wherein the filter (6) is further configured such that one or more transmission and/or reflection properties of the filter vary along the filtering direction, and wherein the filter (6) is arranged between the generation means (5a, 5b) and the collection means (7a, 7b) in the first direction.

2. The detector stack of claim 1, wherein at least one of the first detector and second detector (U1, U2) further comprises absorber means (2), wherein, either
the absorber means (2a, 2b), the generation means (5a, 5b) and the collection means (7a, 7b) are arranged in this order in the first direction,
or
the generation means (5a, 5b) and the collection means (7a, 7b) are the same means which is embedded in the absorber means (2a, 2b).

3. The detector stack of any one of the preceding claims wherein the collection means (5) of the first detector (U1) includes an array of waveguides.

4. The detector stack of claim 3 wherein the waveguides of the array are disposed substantially in parallel to define a collection direction, preferably wherein the waveguides of the array are disposed along the second direction.

5. The detector stack of claim 4, wherein the collection means (5) of the second detector (U2) includes an array of waveguides disposed substantially in parallel to define a collection direction, wherein the collection direction of the first detector and the collection direction of the second detector are tilted one with respect to another of a first tilting angle.

6. The detector stack of claim 5, wherein the first tilting angle is substantially a right angle.

7. The detector stack of any one of claims 4 to 6, wherein the filtering direction of the filter of the first detector (U1) is rotated of a second tilting angle with respect to the collection direction of the first detector (U1).

8. The detector of claim 7, wherein the second tilting angle is substantially a right angle.

9. The detector stack of any one of the preceding claims, further comprising a measurement device configured to measure the output signals, wherein the measurement device is configured to perform time of flight measurements.

10. The detector stack of any one of the preceding claims,
wherein, a volume between the first detector and the second detector is free from structural elements.

11. The detector stack of any one of the preceding claims, wherein the collection means of the first detector (7a) and the collection means of the second detector (7b) are configured to respectively output output signals representing different one-dimensional travel directions of the incident particles in a plane defined by a second direction and a third direction, the first direction, the second direction and the third direction being different directions.

12. The detector stack of any one of the preceding claims, wherein the generation means (5a, 5b) is a generation layer and the collection means (7a, 7b) is a collection layer, wherein the generation layer and the collection layer are layers extending along the second direction and the third direction.

13. A method for detecting energy and spatial distribution of particles by using a detector stack comprising a first detector and a second detector (U1, U2), arranged along a first direction, each of the first detector and second detector comprising generation means and collection means, the collection means of the first detector (7a) and the collection means of the second detector (7b) being configured to respectively output output signals representing different one-dimensional travel directions of the incident particles, the first detector further comprising a filter (6) arranged between the first generation means and the first collection means in the first direction, the method comprising the steps of:
providing the detector stack,
generating photons or charged particles by letting incident particles interacting with the generation means of the first detector, the photons or charged particles being indicative of energies of the respective incident particles,
filtering the generated photons or charged particles along a filtering direction, wherein the filtering direction is an axis along which transmission and/or reflection properties of the filter (6) vary and which is oriented perpendicular to an axis along which the filter (6) extends in thickness,
collecting the photons or charged particles generated by the generation means of the first detector via the collection means of the first detector,
outputting an output signal representing information of a one-dimensional travelling direction of the incident particles,
generating photons or charged particles by letting incident particles interacting with the generation means of the second detector, the photons or charged particles being indicative of energies of the respective incident particles,
collecting the photons or charged particles generated by the generation means of the second detector via the collection means of the second detector,
outputting an output signal representing information of a one-dimensional travelling direction of the incident particles.

14. A use of a filter (6) in a detector stack comprising a first detector and a second detector (U1, U2) arranged along a first direction,
each of the first detector and second detector (U1, U2) comprising:
generation means (5a, 5b) configured to generate photons or charged particles when interacting with incident particles, the photons or charged particles being indicative of energies of the respective incident particles,
collection means (7a, 7b) configured to collect the generated photons or charged particles and output an output signal representing information of a one-dimensional travelling direction of the incident particles,
wherein the collection means of the first detector (7a) and the collection means of the second detector (7b) are configured to respectively output output signals representing different one-dimensional travel directions of the incident particles,
wherein the filter (6) is configured to filter generated photons or charged particles along a filtering direction and is oriented perpendicular to an axis along which the filter (6) extends in thickness, wherein the filter (6) is further configured such that one or more transmission and/or reflection properties of the filter vary along the filtering direction, and
wherein the filter (6) is to be arranged between the generation means (5a, 5b) and the collection means (7a, 7b) in the first direction.

15. The use of a filter of claim 14, wherein the detector stack is the detector stack of any one of the preceding claims.

## Patentansprüche

1. Detektorstapel, umfassend einen ersten Detektor und einen zweiten Detektor (U1, U2), die entlang einer ersten Richtung angeordnet sind,
wobei der erste Detektor und der zweite Detektor (U1, U2) jeweils umfassen:
Erzeugungsmittel (5a, 5b), die konfiguriert sind, um Photonen oder geladene Teilchen zu erzeugen, wenn sie mit einfallenden Teilchen interagieren, wobei die Photonen oder geladenen Teilchen Energien der jeweiligen einfallenden Teilchen anzeigen,
Sammelmittel (7a, 7b), die konfiguriert sind, um die erzeugten Photonen oder geladenen Teilchen zu sammeln und ein Ausgangssignal auszugeben, das Informationen einer eindimensionalen Bewegungsrichtung der einfallenden Teilchen darstellt,
wobei die Sammelmittel des ersten Detektors (7a) und die Sammelmittel des zweiten Detektors (7b) konfiguriert sind, um jeweils Ausgangssignale auszugeben, die unterschiedliche eindimensionale Bewegungsrichtungen der einfallenden Teilchen darstellen,
wobei der Detektorstapel **dadurch gekennzeichnet ist, dass** der erste Detektor (7a) einen Filter (6) umfasst, der konfiguriert ist, um die erzeugten Photonen oder geladenen Teilchen entlang einer Filterrichtung zu filtern, die senkrecht zu einer Achse ausgerichtet ist, entlang der sich der Filter (6) in der Dicke erstreckt, wobei der Filter (6) ferner so konfiguriert ist, dass eine oder mehrere Übertragungs- und/oder Reflexionseigenschaften des Filters entlang der Filterrichtung variieren, und wobei der Filter (6) zwischen den Erzeugungsmitteln (5a, 5b) und den Sammelmitteln (7a, 7b) in der ersten Richtung angeordnet ist.

2. Detektorstapel nach Anspruch 1, wobei mindestens einer von dem ersten Detektor und dem zweiten Detektor (U1, U2) ferner Absorbermittel (2) umfasst, wobei entweder
die Absorbermittel (2a, 2b), die Erzeugungsmittel (5a, 5b) und die Sammelmittel (7a, 7b) in dieser Reihenfolge in der ersten Richtung angeordnet sind,
oder
die Erzeugungsmittel (5a, 5b) und die Sammelmittel (7a, 7b) die gleichen Mittel sind, die in den Absorbermitteln (2a, 2b) eingebettet sind.

3. Detektorstapel nach einem der vorhergehenden Ansprüche, wobei die Sammelmittel (5) des ersten Detektors (U1) eine Anordnung von Wellenleitern umfassen.

4. Detektorstapel nach Anspruch 3, wobei die Wellenleiter der Anordnung im Wesentlichen parallel angeordnet sind, um eine Sammelrichtung zu definieren, wobei die Wellenleiter der Anordnung vorzugsweise entlang der zweiten Richtung angeordnet sind.

5. Detektorstapel nach Anspruch 4, wobei die Sammelmittel (5) des zweiten Detektors (U2) eine Anordnung von Wellenleitern umfassen, die im Wesentlichen parallel angeordnet sind, um eine Sammelrichtung zu definieren, wobei die Sammelrichtung des ersten Detektors und die Sammelrichtung des zweiten Detektors um einen ersten Neigungswinkel zueinander geneigt sind.

6. Detektorstapel nach Anspruch 5, wobei der erste Neigungswinkel im Wesentlichen ein rechter Winkel ist.

7. Detektorstapel nach einem der Ansprüche 4 bis 6, wobei die Filterrichtung des Filters des ersten Detektors (U1) um einen zweiten Neigungswinkel in Bezug auf die Sammelrichtung des ersten Detektors (U1) gedreht ist.

8. Detektor nach Anspruch 7, wobei der zweite Neigungswinkel im Wesentlichen ein rechter Winkel ist.

9. Detektorstapel nach einem der vorhergehenden Ansprüche, ferner umfassend eine Messvorrichtung, die konfiguriert ist, um die Ausgangssignale zu messen, wobei die Messvorrichtung konfiguriert ist, um Laufzeitmessungen durchzuführen.

10. Detektorstapel nach einem der vorhergehenden Ansprüche,
wobei ein Volumen zwischen dem ersten Detektor und dem zweiten Detektor frei von Strukturelementen ist.

11. Detektorstapel nach einem der vorhergehenden Ansprüche, wobei die Sammelmittel des ersten Detektors (7a) und die Sammelmittel des zweiten Detektors (7b) konfiguriert sind, um jeweils Ausgangssignale auszugeben, die unterschiedliche eindimensionale Bewegungsrichtungen der einfallenden Teilchen in einer Ebene darstellen, die durch eine zweite Richtung und eine dritte Richtung definiert ist, wobei die erste Richtung, die zweite Richtung und die dritte Richtung unterschiedliche Richtungen sind.

12. Detektorstapel nach einem der vorhergehenden Ansprüche, wobei die Erzeugungsmittel (5a, 5b) eine Erzeugungsschicht sind und die Sammelmittel (7a, 7b) eine Sammelschicht sind, wobei die Erzeugungsschicht und die Sammelschicht Schichten sind, die sich entlang der zweiten Richtung und der dritten Richtung erstrecken.

13. Verfahren zum Detektieren von Energie und räumlicher Verteilung von Teilchen unter Verwendung eines Detektorstapels, der einen ersten Detektor und einen zweiten Detektor (U1, U2) umfasst, die entlang einer ersten Richtung angeordnet sind, wobei jeder des ersten Detektors und des zweiten Detektors Erzeugungsmittel und Sammelmittel umfasst, wobei die Sammelmittel des ersten Detektors (7a) und die Sammelmittel des zweiten Detektors (7b) konfiguriert sind, um jeweils Ausgangssignale auszugeben, die unterschiedliche eindimensionale Bewegungsrichtungen der einfallenden Teilchen darstellen, wobei der erste Detektor ferner einen Filter (6) umfasst, der zwischen den ersten Erzeugungsmitteln und den ersten Sammelmitteln in der ersten Richtung angeordnet ist, wobei das Verfahren die folgenden Schritte umfasst:
Bereitstellen des Detektorstapels,
Erzeugen von Photonen oder geladenen Teilchen, indem einfallende Teilchen mit den Erzeugungsmitteln des ersten Detektors interagieren gelassen werden, wobei die Photonen oder geladenen Teilchen Energien der jeweiligen einfallenden Teilchen anzeigen,
Filtern der erzeugten Photonen oder geladenen Teilchen entlang einer Filterrichtung, wobei die Filterrichtung eine Achse ist, entlang der Übertragungs- und/oder Reflexionseigenschaften des Filters (6) variieren und die senkrecht zu einer Achse ausgerichtet ist, entlang der sich der Filter (6) in der Dicke erstreckt,
Sammeln der Photonen oder geladenen Teilchen, die von den Erzeugungsmitteln des ersten Detektors erzeugt werden, über die Sammelmittel des ersten Detektors,
Ausgeben eines Ausgangssignals, das Informationen einer eindimensionalen Bewegungsrichtung der einfallenden Teilchen darstellt,
Erzeugen von Photonen oder geladenen Teilchen, indem einfallende Teilchen mit den Erzeugungsmitteln des zweiten Detektors interagieren gelassen werden, wobei die Photonen oder geladenen Teilchen Energien der jeweiligen einfallenden Teilchen anzeigen,
Sammeln der Photonen oder geladenen Teilchen, die von den Erzeugungsmitteln des zweiten Detektors erzeugt werden, über die Sammelmittel des zweiten Detektors,
Ausgeben eines Ausgangssignals, das Informationen einer eindimensionalen Bewegungsrichtung der einfallenden Teilchen darstellt.

14. Verwendung eines Filters (6) in einem Detektorstapel, umfassend einen ersten Detektor und einen zweiten Detektor (U1, U2), die entlang einer ersten Richtung angeordnet sind,
wobei der erste Detektor und der zweite Detektor (U1, U2) jeweils umfassen:
Erzeugungsmittel (5a, 5b), die konfiguriert sind, um Photonen oder geladene Teilchen zu erzeugen, wenn sie mit einfallenden Teilchen interagieren, wobei die Photonen oder geladenen Teilchen Energien der jeweiligen einfallenden Teilchen anzeigen,
Sammelmittel (7a, 7b), die konfiguriert sind, um die erzeugten Photonen oder geladenen Teilchen zu sammeln und ein Ausgangssignal auszugeben, das Informationen einer eindimensionalen Bewegungsrichtung der einfallenden Teilchen darstellt,
wobei die Sammelmittel des ersten Detektors (7a) und die Sammelmittel des zweiten Detektors (7b) konfiguriert sind, um jeweils Ausgangssignale auszugeben, die unterschiedliche eindimensionale Bewegungsrichtungen der einfallenden Teilchen darstellen,
wobei der Filter (6) konfiguriert ist, um erzeugte Photonen oder geladene Teilchen entlang einer Filterrichtung zu filtern, und senkrecht zu einer Achse ausgerichtet ist, entlang der sich der Filter (6) in der Dicke erstreckt, wobei der Filter (6) ferner so konfiguriert ist, dass eine oder mehrere Übertragungs- und/oder Reflexionseigenschaften des Filters entlang der Filterrichtung variieren, und
wobei der Filter (6) zwischen den Erzeugungsmitteln (5a, 5b) und den Sammelmitteln (7a, 7b) in der ersten Richtung anzuordnen ist.

15. Verwendung eines Filters nach Anspruch 14, wobei der Detektorstapel der Detektorstapel nach einem der vorhergehenden Ansprüche ist.

## Revendications

1. Empilement de détecteurs comprenant un premier détecteur et un second détecteur (U1, U2) agencés le long d'une première direction,
chacun du premier détecteur et du second détecteur (U1, U2) comprenant :
un moyen de génération (5a, 5b) configuré pour générer des photons ou des particules chargées lors d'une interaction avec des particules incidentes, les photons ou les particules chargées étant indicatifs d'énergies des particules incidentes respectives,
un moyen de collecte (7a, 7b) configuré pour collecter les photons ou les particules chargées générés et délivrer en sortie un signal de sortie représentant des informations d'une direction de déplacement unidimensionnelle des particules incidentes,
dans lequel le moyen de collecte du premier détecteur (7a) et le moyen de collecte du second détecteur (7b) sont configurés pour délivrer en sortie respectivement des signaux de sortie représentant différentes directions de déplacement unidimensionnelles des particules incidentes,
l'empilement de détecteurs étant **caractérisé en ce que** le premier détecteur (7a) comprend un filtre (6) configuré pour filtrer les photons ou les particules chargées générés le long d'une direction de filtrage qui est orientée perpendiculairement à un axe le long duquel le filtre (6) s'étend en épaisseur, dans lequel le filtre (6) est en outre configuré de sorte qu'une ou plusieurs propriétés de transmission et/ou de réflexion du filtre varient le long de la direction de filtrage, et dans lequel le filtre (6) est agencé entre le moyen de génération (5a, 5b) et le moyen de collecte (7a, 7b) dans la première direction.

2. Empilement de détecteurs selon la revendication 1, dans lequel au moins l'un du premier détecteur et du second détecteur (U1, U2) comprend en outre un moyen absorbeur (2), dans lequel, soit
le moyen absorbeur (2a, 2b), le moyen de génération (5a, 5b) et le moyen de collecte (7a, 7b) sont agencés dans cet ordre dans la première direction,
soit
le moyen de génération (5a, 5b) et le moyen de collecte (7a, 7b) sont le même moyen qui est incorporé dans le moyen absorbeur (2a, 2b).

3. Empilement de détecteurs selon l'une quelconque des revendications précédentes, dans lequel le moyen de collecte (5) du premier détecteur (U1) comprend un réseau de guides d'ondes.

4. Empilement de détecteurs selon la revendication 3, dans lequel les guides d'ondes du réseau sont disposés sensiblement en parallèle pour définir une direction de collecte, de préférence dans lequel les guides d'ondes du réseau sont disposés le long de la seconde direction.

5. Empilement de détecteurs selon la revendication 4, dans lequel le moyen de collecte (5) du second détecteur (U2) comprend un réseau de guides d'ondes disposés sensiblement en parallèle pour définir une direction de collecte, dans lequel la direction de collecte du premier détecteur et la direction de collecte du second détecteur sont inclinées l'une par rapport à l'autre d'un premier angle d'inclinaison.

6. Empilement de détecteurs selon la revendication 5, dans lequel le premier angle d'inclinaison est sensiblement un angle droit.

7. Empilement de détecteurs selon l'une quelconque des revendications 4 à 6, dans lequel la direction de filtrage du filtre du premier détecteur (U1) est tournée d'un second angle d'inclinaison par rapport à la direction de collecte du premier détecteur (U1).

8. Détecteur selon la revendication 7, dans lequel le second angle d'inclinaison est sensiblement un angle droit.

9. Empilement de détecteurs selon l'une quelconque des revendications précédentes, comprenant en outre un dispositif de mesure configuré pour mesurer les signaux de sortie, dans lequel le dispositif de mesure est configuré pour effectuer des mesures de temps de vol.

10. Empilement de détecteurs selon l'une quelconque des revendications précédentes,
dans lequel un volume entre le premier détecteur et le second détecteur est exempt d'éléments structurels.

11. Empilement de détecteurs selon l'une quelconque des revendications précédentes, dans lequel le moyen de collecte du premier détecteur (7a) et le moyen de collecte du second détecteur (7b) sont configurés pour délivrer en sortie respectivement des signaux de sortie représentant différentes directions de déplacement unidimensionnelles des particules incidentes dans un plan défini par une seconde direction et une troisième direction, la première direction, la seconde direction et la troisième direction étant des directions différentes.

12. Empilement de détecteurs selon l'une quelconque des revendications précédentes, dans lequel le moyen de génération (5a, 5b) est une couche de génération et le moyen de collecte (7a, 7b) est une couche de collecte, dans lequel la couche de génération et la couche de collecte sont des couches s'étendant le long de la seconde direction et de la troisième direction.

13. Procédé de détection d'énergie et de distribution spatiale de particules en utilisant un empilement de détecteurs comprenant un premier détecteur et un second détecteur (U1, U2), agencés le long d'une première direction, chacun du premier détecteur et du second détecteur comprenant un moyen de génération et un moyen de collecte, le moyen de collecte du premier détecteur (7a) et le moyen de collecte du second détecteur (7b) étant configurés pour délivrer en sortie respectivement des signaux de sortie représentant différentes directions de déplacement unidimensionnelles des particules incidentes, le premier détecteur comprenant en outre un filtre (6) agencé entre le premier moyen de génération et le premier moyen de collecte dans la première direction, le procédé comprenant les étapes consistant à :
fournir l'empilement de détecteurs,
générer des photons ou des particules chargées en laissant des particules incidentes interagir avec le moyen de génération du premier détecteur, les photons ou les particules chargées étant indicatifs d'énergies des particules incidentes respectives,
filtrer les photons ou les particules chargées générés le long d'une direction de filtrage, dans lequel la direction de filtrage est un axe le long duquel des propriétés de transmission et/ou de réflexion du filtre (6) varient et qui est orienté perpendiculairement à un axe le long duquel le filtre (6) s'étend en épaisseur,
collecter les photons ou les particules chargées générés par le moyen de génération du premier détecteur via le moyen de collecte du premier détecteur,
délivrer en sortie un signal de sortie représentant des informations d'une direction de déplacement unidimensionnelle des particules incidentes,
générer des photons ou des particules chargées en laissant des particules incidentes interagir avec le moyen de génération du second détecteur, les photons ou les particules chargées étant indicatifs d'énergies des particules incidentes respectives, collecter les photons ou les particules chargées générés par le moyen de génération du second détecteur via le moyen de collecte du second détecteur,
délivrer en sortie un signal de sortie représentant des informations d'une direction de déplacement unidimensionnelle des particules incidentes.

14. Utilisation d'un filtre (6) dans un empilement de détecteurs comprenant un premier détecteur et un second détecteur (U1, U2) agencés le long d'une première direction,
chacun du premier détecteur et du second détecteur (U1, U2) comprenant :
un moyen de génération (5a, 5b) configuré pour générer des photons ou des particules chargées lors d'une interaction avec des particules incidentes, les photons ou les particules chargées étant indicatifs d'énergies des particules incidentes respectives,
un moyen de collecte (7a, 7b) configuré pour collecter les photons ou les particules chargées générés et délivrer en sortie un signal de sortie représentant des informations d'une direction de déplacement unidimensionnelle des particules incidentes,
dans lequel le moyen de collecte du premier détecteur (7a) et le moyen de collecte du second détecteur (7b) sont configurés pour délivrer en sortie respectivement des signaux de sortie représentant différentes directions de déplacement unidimensionnelles des particules incidentes,
dans lequel le filtre (6) est configuré pour filtrer des photons ou des particules chargées générés le long d'une direction de filtrage et est orienté perpendiculairement à un axe le long duquel le filtre (6) s'étend en épaisseur, dans lequel le filtre (6) est en outre configuré de sorte qu'une ou plusieurs propriétés de transmission et/ou de réflexion du filtre varient le long de la direction de filtrage, et
dans lequel le filtre (6) doit être agencé entre le moyen de génération (5a, 5b) et le moyen de collecte (7a, 7b) dans la première direction.

15. Utilisation d'un filtre selon la revendication 14, dans laquelle l'empilement de détecteurs est l'empilement de détecteurs selon l'une quelconque des revendications précédentes.
